# EUROPEAN PATENT APPLICATION

(11) **EP 3 449 782 A1**
(43) Date of publication of application: **06.03.2019**
(21) Application number: 18191184.3
(22) Date of filing: 28.08.2018
(51) Int. Cl.: A47J 31/46, F16K 7/17, F16K 15/14

(54) **VALVE BODY AND COFFEE MAKER HAVING SAME**

(30) Priority: 28.08.2017 CN 201710748071
(71) Applicant: BSH Hausgeräte GmbH, 81739 München (DE)
(72) Inventor: Cui, Huawei, Nanjing, 210046 (CN); Lu, Peng, Nanjing, 210046 (CN); Wu, Liansen, Nanjing, 210046 (CN)

(57) **Abstract**

The present invention discloses a valve body and a coffee maker having the valve body. The valve body includes: a housing internally having a chamber, the housing being provided with an air hole in communication with the outside and an opening in communication with a hot water pipe of the coffee maker; a separator plate separating the chamber into a first chamber and a second chamber, the first chamber being in communication with the air hole, the second chamber being in communication with the opening, and an air hole being provided on the separator plate; and a cover body disposed in the second chamber, where the cover body elastically deforms under the control of an air pressure difference between the first chamber and the second chamber to seal or open the air hole, to control ventilation between the first chamber and the second chamber.

## Description

### BACKGROUND

### Technical Field

The present invention relates to the field of home appliance technologies, and specifically to a valve body and a coffee maker having the valve body.

### Related Art

Most existing beverage preparation machines, such as a coffee maker, have a "brewing chamber" or a "brewing unit" for accommodating ingredients that are divided into parts for preparing food or a beverage. A water pump delivers water from a water tank to a heating apparatus for heating, and the water is heated therein and transported to the brewing chamber. The pump stops delivery of water after preset water consumption is reached, while the heating apparatus further operates. Water still that stays in the heating apparatus is quickly converted to vapor and generates a vapor pressure, because no more water is supplied subsequently to cool down the water in the heating apparatus. The pressure pushes hot water into the brewing chamber, and a corresponding coffee beverage is prepared and then flows into a cup. A pressure and a water temperature greatly affect the coffee taste, and therefore the pressure in the brewing chamber is greater than the atmospheric pressure. For extraction of baked and ground coffee, the required pressure is usually approximately 2 bars to 12 bars.

After the brewing ends, the heating apparatus stops heating, and when a temperature in the system reduces below a boiling point of water, vapor in a downstream pipe of a heating pipe cools down, so that the vapor condenses in the pipe and a volume thereof reduces, and a negative pressure is generated. If air is taken out or residual liquid is brought out from the brewing chamber by the negative pressure, the pressure balance in the brewing chamber may be affected. To prevent this, a one-way valve is provided upstream of the brewing chamber. For example, the one-way valve may be designed as an elastic grooving diaphragm. However, the function of the one-way valve may be impaired due to aging and a machining tolerance of the diaphragm. Consequently, air tightness cannot be completely ensured.

For the problem in the prior art that the pressure balance of the brewing chamber is affected because the air tightness of the one-way valve in the coffee maker cannot be ensured, no effective solutions are provided currently.

### SUMMARY

The present invention provides a valve body and a coffee maker having the valve body, to resolve at least the problem in the prior art that a pressure balance of a brewing chamber is affected because air tightness of a one-way valve cannot be ensured.

To achieve the objective, according to an aspect of the present invention, a valve body is provided.

According to a valve body, of the present invention, for a coffee maker, the valve body includes: a housing internally having a chamber, the housing being provided with an air hole in communication with the outside and an opening in communication with a hot water pipe of the coffee maker; and
a separator plate separating the chamber into a first chamber and a second chamber, the first chamber being in communication with the air hole, the second chamber being in communication with the opening, and an air hole being provided on the separator plate; and a cover body disposed in the second chamber, where the cover body elastically deforms under the control of an air pressure difference between the first chamber and the second chamber to seal or open the air hole, to control air communication between the first chamber and the second chamber. The first chamber is in communication with external atmosphere, the air pressure of the second chamber is a changing internal air pressure, and the cover body elastically deforms under an air pressure difference between the first chamber and the second chamber to seal or open the air hole, to control air communication between the second chamber and the external atmosphere, so that a pressure balance of the system is implemented, and the brewing chamber.

Preferably, the cover body seals the air hole when the air pressure of the first chamber is balanced with that of the second chamber or the air pressure of the second chamber is greater than the air pressure of the first chamber.

Preferably, when the air pressure of the first chamber is greater than the air pressure of the second chamber, the cover body elastically deforms and leaves the separator plate, to open the air hole.

Preferably, when the air pressure of the second chamber is greater than the air pressure of the first chamber, the cover body elastically deforms and approaches the separator plate, to seal the air hole.

Preferably, the separator plate has a through hole, and a cylinder is provided on the cover body, where the cylinder penetrates the through hole, and the cover body is mounted on the separator plate by using a clamping portion on the cylinder. The design helps the cover body be mounted onto the separator plate, facilitating latter cleaning and replacing.

Preferably, the cover body is made of a silica gel material. Preferably, the cover body is of an umbrella-shaped structure. Preferably, a seal ring disposed in the housing and abutting against the separator plate is provided.

Preferably, the housing includes a first housing and a second housing, the air hole being provided on the first housing, and the opening being provided on the second housing.

Preferably, outer walls of the first housing and the second housing are provided with a protrusion and a groove engaging with each other.

According to the other aspect of the present invention, a coffee maker is provided. The coffee maker has a water tank, a heating pipe and a brewing chamber, and has the valve body described above.

Based on the present invention, the problem in the prior art that the pressure balance of the brewing chamber is affected because the air tightness of the one-way valve cannot be ensured is resolved, so that the coffee maker automatically balances internal negative pressure thereof after the brewing is completed, and no manual operation is needed. In addition, the present invention has a simple structure and a cost is low, and improves use experience of a user.

### BRIEF DESCRIPTION OF THE DRAWINGS

The accompanying drawings herein are used for providing further understanding of the present invention, and constitute a part of this application. Schematic embodiments of the present invention and the illustration thereof are used for describing the present invention, and do not constitute inappropriate limitation on the present invention. In the drawings:
- FIG. 1: is a schematic structural diagram of a coffee maker system;
- FIG. 2: is a schematic sectional view of a valve body;
- FIG. 3: is a schematic exploded diagram of a valve body;
- FIG. 4: is a schematic structural diagram of a cover body of a first type;
- FIG. 5: is a schematic sectional view of a cover body of a first type; and
- FIG. 6: is a schematic sectional view of a cover body of a second type.

### DETAILED DESCRIPTION

The following descries the present invention in detail with reference to the accompanying drawings and in accordance with embodiments. It should be noted that the embodiments in this application and the features in the embodiments may be mutually combined as long as they do not conflict.

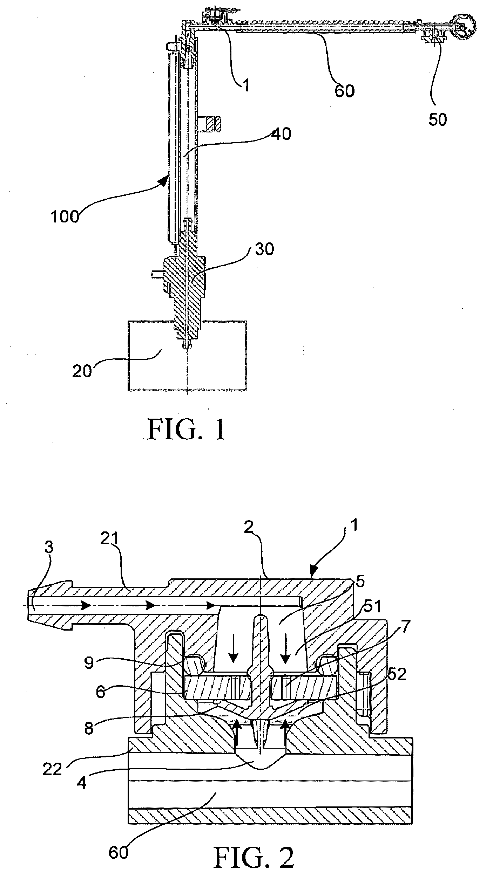

In an embodiment, FIG. 1 is a schematic structural diagram of a coffee maker system. As shown in FIG. 1, a coffee maker 100 has a water tank 20, a water pump 30, a heating apparatus 40, and a brewing chamber 50, and a valve body 1 is provided upstream of the brewing chamber 50.

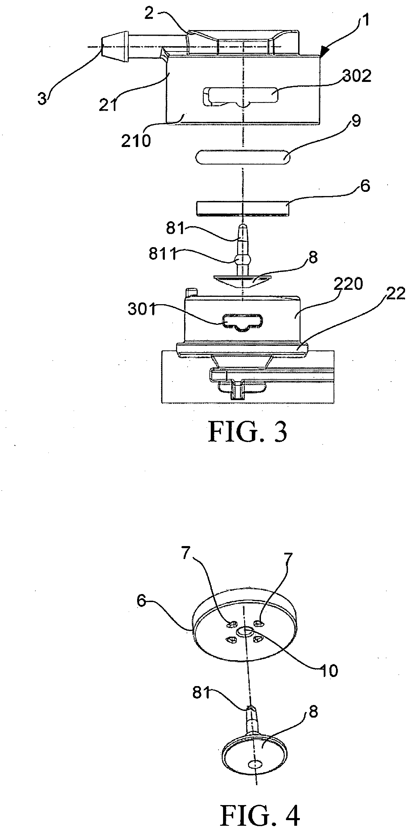

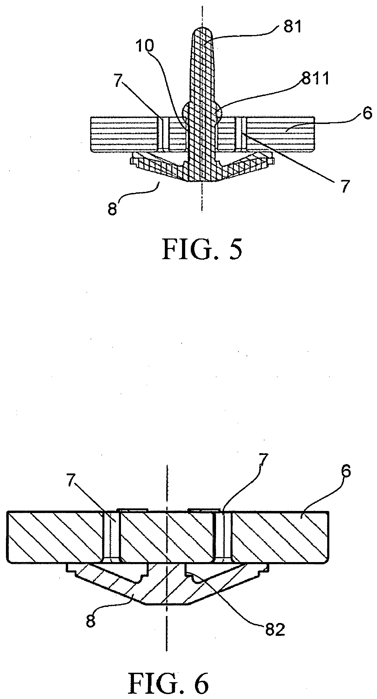

FIG. 2 is a schematic sectional view of a valve body. FIG. 3 is a schematic exploded diagram of a valve body. FIG. 4 is a schematic structural diagram of a cover body of a first type. FIG. 5 is a schematic sectional view of a cover body of a first type. As shown in FIG. 2, FIG. 3, FIG. 4 and FIG. 5, the valve body 1 includes:
a housing 2 internally having a chamber 5;
the housing 2 being provided with an air hole 3 in communication with the outside and an opening 4 in communication with a hot water pipe 60 of the coffee maker 100;
a separator plate 6 separating the chamber 5 into a first chamber 51 and a second chamber 52, the first chamber 51 being in communication with the air hole 3, the second chamber 52 being in communication with the opening 4, and an air hole 7 being provided on the separator plate 6;
a cover body 8 disposed in the second chamber 52,
where the cover body 8 elastically deforms under the control of an air pressure difference between the first chamber 51 and the second chamber 52 to seal or open the air hole 7, to control air communication between the first chamber 51 and the second chamber 52.

The first chamber 51 is in communication with external atmosphere, and the air pressure is P0. The air pressure of the second chamber 52 is a changing internal air pressure P1 of the coffee maker. The cover body 8 elastically deforms under an air pressure difference between P0 and P1 to seal or open the air hole 7, to control air communication between the second chamber 52 and the external atmosphere.

Specifically, when the air pressure of the first chamber 51 is balanced with that of the second chamber 52, or the air pressure of the second chamber 52 is greater than the air pressure of the first chamber 51, the cover body 8 seals the air hole 7.

In a normal state, the air pressure of the first chamber 51 is balanced with that of the second chamber 52, and the cover body 8 is in a closed state.

In a process of brewing and preparing a coffee by using a coffee maker, as heating is performed, vapor is generated, and the air pressure in the system increases. When the air pressure of the second chamber 52 is greater than the air pressure of the first chamber 51, the cover body 8 elastically deforms and approaches the separator plate 6, to seal the air hole 7, so that air tightness is ensured.

After the coffee is brewed by using the coffee maker, the vapor condenses, and the air pressure in the system reduces to a negative pressure. When the air pressure of the first chamber 51 is greater than the air pressure of the second chamber 52, the cover body 8 elastically deforms (flips) and leaves the separator plate 6, to open the air hole 7. Therefore, the air pressure balance is maintained in the system, the brewing chamber 50 is not affected, and a status such as back suction does not appear.

Elastic deformation of the cover body is completely caused by the internal and the external air pressure, no manual operation is needed, a structure is simple, and a cost is low.

Preferably, the cover body 8 is made of a silica gel material, is easily made and easily generates elastic deformation. The cover body 8 is of an umbrella-shaped structure, and using the umbrella-shaped structure can make the cover body has a cavity, so that the cover body easily generates deformation.

Preferably, as shown in FIG. 4 and FIG. 5, the separator plate 6 has a through hole 10, a cylinder 81 is provided on the cover body 8, where the cylinder 81 penetrates the through hole 10, and the cover body 8 is mounted on the separator plate 6 by using a clamping portion 811 on the cylinder 81. The design helps the cover body be mounted onto the separator plate, facilitating latter cleaning and replacing.

The cover body 8 may further adopt another type of manner. FIG. 6 is a schematic sectional view of a cover body of a second type. As shown in FIG. 6, an end 82 of the cover body 8 is connected to a surface 62 that is of the separator plate 6 and that is located in the second chamber 52. When a pressure difference of the system changes, the cover body 8 deforms, for example, approaches the separator plate 6, or leaves the separator plate 6 and flips to open the air hole 7.
To further ensure air tightness between the first chamber 51 and the second chamber 52, the valve body 1 further includes a seal ring 9 disposed in the housing 2 and abutting the separator plate 6.

Preferably, the housing 2 includes a first housing 21 and a second housing 22, the air hole 7 being provided on the first housing 21, and the opening 4 being provided on the second housing 22. The detachable housing facilitates the mounting of internal components of the valve body 1.

A protrusion 301 and a groove 302 engaging with each other are provided on outer walls 210, and 220 of the first housing 21 and the second housing 22. The protrusion engages with the groove by means of clamping, facilitating mounting and assembling.

Based on the present invention, the problem in the prior art that the pressure relief is not convenient or is complex to be performed in the coffee maker after a coffee is brewed is resolved, so that the coffee maker automatically balances the internal negative pressure thereof after the brewing is completed, and no manual operation is needed. In addition, a structure is simple, a cost is low, and use experience of a user is improved at the same time.

The embodiments described in the foregoing and shown in the accompanying drawings are merely used for illustrating the present invention, and are not the entire present invention. Within the scope of basic technical ideas of the present invention, changes in any form made by a person of ordinary skill in the related art shall all fall within the protection scope of the present invention.

## Claims

1. A valve body (1) for a coffee maker (100), **characterized in that** the valve body (1) comprises:
a housing (2) internally having a chamber (5), the housing (2) being provided with an air hole (3) in communication with the outside and an opening (4) in communication with a hot water pipe (60) of the coffee maker (100);
a separator plate (6) separating the chamber (5) into a first chamber (51) and a second chamber (52), the first chamber (51) being in communication with the air hole (3), the second chamber (52) being in communication with the opening (4), and an air hole (7) being provided on the separator plate (6); and
a cover body (8) disposed in the second chamber (52),
wherein the cover body (8) elastically deforms under the control of an air pressure difference between the first chamber (51) and the second chamber (52) to seal or open the air hole (7), to control ventilation between the first chamber (51) and the second chamber (52).

2. The valve body according to claim 1, **characterized in that**
the cover body (8) seals the air hole (7) when the air pressure of the first chamber (51) is balanced with that of the second chamber (52) or the air pressure of the second chamber (52) is greater than the air pressure of the first chamber (51).

3. The valve body according to claim 2, **characterized in that**
when the air pressure of the first chamber (51) is greater than the air pressure of the second chamber (52), the cover body (8) elastically deforms and leaves the separator plate (6), to open the air hole (7).

4. The valve body according to claim 2, **characterized in that**
when the air pressure of the second chamber (52) is greater than the air pressure of the first chamber (51), the cover body (8) elastically deforms and approaches the separator plate (6), to seal the air hole (7).

5. The valve body according to claim 3, **characterized in that**
the separator plate (6) has a through hole (10), and a cylinder (81) is provided on the cover body (8),
wherein the cylinder (81) penetrates the through hole (10), and the cover body (8) is mounted on the separator plate (6) by using a clamping portion (811) on the cylinder (81).

6. The valve body according to claim 1, **characterized in that**
the cover body (8) is made of a silica gel material.

7. The valve body according to claim 1, **characterized in that**
the cover body (8) is of an umbrella-shaped structure.

8. The valve body according to claim 1, **characterized by** comprising:
a seal ring (9) disposed in the housing (2) and abutting against the separator plate (6).

9. The valve body according to claim 1, **characterized in that**
the housing (2) comprises a first housing (21) and a second housing (22), the air hole (3) being provided on the first housing (21), and the opening (4) being provided on the second housing (22).

10. The valve body according to claim 1, **characterized in that**
a protrusion (301) and a groove (302) engaging with each other are provided on outer walls (210, 220) of the first housing (21) and the second housing (22).

11. A coffee maker (100), comprising a water tank (20), a heating pipe (40) and a brewing chamber (50), and **characterized by** comprising:
the valve body according to any one of claims 1 to 10.
